# FASCICULE DE BREVET EUROPEEN

(11) **EP 2 858 842 B1**
(45) Date de publication et mention de la délivrance du brevet: **07.07.2021**
(21) Numéro de dépôt: 13731044.7
(22) Date de dépôt: 07.06.2013
(51) Int. Cl.: B60H 1/00, B60H 1/22

(54) **INSTALLATION DE CONDITIONNEMENT THERMIQUE D'UN HABITACLE D'UN VÉHICULE, NOTAMMENT UN VÉHICULE ÉLECTRIQUE**
EINRICHTUNG ZUR STEUERUNG DER TEMPERATUR EINES FAHRGASTRAUMS EINES FAHRZEUGS, INSBESONDERE EINES ELEKTROFAHRZEUGS
EQUIPMENT FOR CONTROLLING THE TEMPERATURE OF A PASSENGER COMPARTMENT OF A VEHICLE, IN PARTICULAR AN ELECTRIC VEHICLE

(30) Priorité: 08.06.2012 FR 1255401
(43) Date de publication de la demande: 15.04.2015
(73) Titulaire: Valeo Systemes Thermiques, 78321 Le Mesnil Saint Denis Cédex (FR)
(72) Inventeur: MARTINELL, Amanda, F-78640 Neauphle le Château (FR); AILLOUD, Fabrice, F-78280 Guyancourt (FR); LOUP, Didier, F-78310 Maurepas (FR); VINCENT, Philippe, F-28230 Epernon (FR)
(74) Mandataire: Tran, Chi-Hai
(86) Numéro de dépôt international: PCT/EP2013/061860
(87) Numéro de publication internationale: WO 2013/182706

(56) Documents cités:
- EP-A1- 0 392 296
- EP-A1- 0 567 402
- EP-A1- 0 780 251
- EP-A1- 2 211 589
- FR-A1- 2 667 829
- FR-A1- 2 703 305
- FR-A1- 2 706 816

## Description

Le domaine technique de la présente invention est celui des installations de conditionnement thermique d'un habitacle d'un véhicule automobile, en particulier un véhicule électrique.

Il est connu d'assurer la gestion thermique d'un habitacle d'un véhicule au moyen d'une installation de chauffage, ventilation et/ou climatisation agencée dans l'habitacle du véhicule. Une telle installation de chauffage, ventilation et/ou climatisation comprend un boîtier délimitant un canal de circulation d'un flux d'air destiné à être diffusé dans l'habitacle. Un échangeur de chaleur est disposé dans le canal de circulation afin de modifier la température du flux d'air avant d'être diffusé dans l'habitacle, en fonction d'une commande fixée par un occupant du véhicule. Un tel boîtier comprend également un système de distribution canalisant le flux d'air dans diverses zones de l'habitacle, notamment une zone disposée au niveau d'un pare-brise du véhicule et une zone inférieure, une zone médiane ou une zone supérieure de l'habitacle du véhicule.

Le boîtier de l'installation de chauffage, ventilation et/ou climatisation est installé dans l'habitacle, entre une planche du bord du véhicule et une paroi séparant l'habitacle et un compartiment moteur du véhicule.

La propulsion du véhicule peut être assurée par un moteur thermique ou par un moteur hybride ou totalement électrique. Le document FR 2 703 305 A1 divulgue un véhicule comportant un système de conditionnement thermique d'un type connu.

Or, les installations de chauffage, ventilation et/ou climatisation connues de l'état de la technique ne sont pas appropriées à la gestion thermique de l'habitacle d'un véhicule électrique. En effet, l'autonomie de tels véhicules électriques est conditionnée au moins en partie par une source d'énergie, constituée par exemple par une batterie.

Par ailleurs, pour le confort des occupants du véhicule, il est souhaitable que l'espace intérieur de l'habitacle soit le plus vaste possible. Toutefois, les dimensions générales du véhicule sont définies pour correspondre à des utilisations spécifiques. En particulier, pour un usage urbain, les dimensions du véhicule sont réduites.

Dans une telle configuration, pour maintenir un niveau de confort acceptable, notamment pour un véhicule à usage urbain, il est souhaitable de réduire l'encombrement de certains composants, par exemple la planche de bord. Une telle réduction dimensionnelle rend alors impossible le positionnement d'une installation de chauffage, ventilation et/ou climatisation telle que connue de l'art antérieur.

De plus, la fonction chauffage est assurée, sur un véhicule électrique, par un radiateur électrique, notamment un radiateur électrique haute tension. L'utilisation d'un tel radiateur électrique s'accompagne de contraintes relatives à la sécurité des personnes, pour éviter tout risque d'électrocution des occupants du véhicule.

Enfin, afin d'assurer un confort optimal des occupants, il est nécessaire d'assurer une fonction supplémentaire de stratification, permettant de créer un écart de température entre deux bouches de sortie d'air afin de diffuser le flux d'air dans deux zones différentes de l'habitacle, notamment entre la bouche de sortie d'air de la zone inférieure et la bouche de sortie d'air de la zone médiane de l'habitacle du véhicule, à des températures différentes.

De manière à prendre en compte les inconvénients et contraintes détaillés précédemment, la présente invention a donc pour objet une installation de conditionnement thermique pour un véhicule, notamment un véhicule électrique, permettant une mise au point aérothermique d'un flux d'air destiné à être diffusé dans un habitacle du véhicule, comprenant au moins un module de traitement thermique, apte à traiter thermiquement le flux d'air, et un module de distribution, apte à distribuer le flux d'air dans l'habitacle suivant les caractéristiques de la revendication 1.

Enfin, selon des caractéristiques additionnelles, le module de traitement thermique comprend un boîtier de traitement thermique dans lequel est logé le radiateur électrique et, avantageusement, au moins un groupe moto-ventilateur, apte à mettre en circulation le flux d'air dans l'installation de conditionnement thermique.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue partiellement éclatée en perspective d'un système de conditionnement thermique selon la présente invention,
- la figure 2 est une vue en perspective du système de conditionnement thermique de la figure 1,
- la figure 3 est une vue de côté du système de conditionnement thermique de la figure 1, et
- la figure 4 est une vue en coupe du système de conditionnement thermique de la figure 3 selon un plan médian P.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Selon la présente invention, les termes "aval", "amont", "en série" et "parallèle" qualifient la position d'un composant par rapport à un autre, selon le sens de circulation d'un flux d'air dans une installation de conditionnement thermique selon la présente invention.

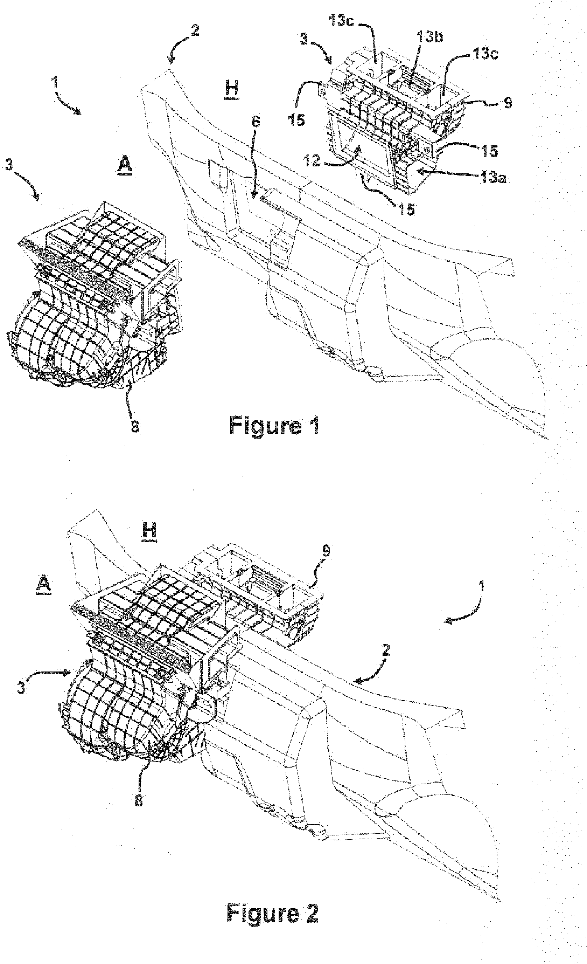

Les figures 1 et 2 sont, respectivement, des vues en perspective d'un système de conditionnement thermique 1 d'un habitacle, notamment d'un véhicule électrique. Un tel système de conditionnement thermique 1 comprend, d'une part, une paroi de séparation 2 séparant un habitacle H et un compartiment avant A du véhicule, et, d'autre part, une installation de conditionnement thermique 3 permettant une mise au point aérothermique d'un flux d'air destiné à être diffusé dans l'habitacle H.

Plus particulièrement, la figure 1 présente le système de conditionnement thermique 1 préalablement à l'assemblage de la paroi de séparation 2 et de l'installation de conditionnement thermique 3. La figure 2 présente le système de conditionnement thermique 1 après l'assemblage de la paroi de séparation 2 et de l'installation de conditionnement thermique 3.

La paroi de séparation 2 prend, par exemple, la forme d'une tôle s'étendant sensiblement verticalement entre un plancher et un pare-brise avant (non représentés) du véhicule.

Le compartiment avant A du véhicule peut par exemple recevoir un ou plusieurs composants d'une chaîne de propulsion du véhicule, comme par exemple un moteur électrique, un onduleur, des calculateurs, etc...

La paroi de séparation 2 comprend également au moins un passage 6. Préférentiellement, la paroi de séparation 2 comprend une bande d'accostage agencée autour du passage 6 et contre laquelle l'installation de conditionnement thermique 3 vient en appui.

Selon la présente invention, l'installation de conditionnement thermique 3 est constituée d'un module de traitement thermique 8, permettant la mise au point aérothermique du flux d'air destiné à être diffusé dans l'habitacle H et d'un module de distribution 9, permettant de distribuer le flux d'air traité thermiquement dans le module de traitement thermique 8 dans diverses zones de l'habitacle H, en particulier une zone localisée au niveau d'un pare-brise du véhicule, ou "zone dégivrage", une zone localisée en partie inférieure de l'habitacle H, ou "zone pieds", une zone localisée en partie médiane d'une planche de bord du véhicule ou une zone latérale de l'habitacle H du véhicule, ou "zone aération".

Selon l'invention, le module de traitement thermique 8 et le module de distribution 9 sont deux sous-ensembles distincts et disjoints de l'installation de conditionnement thermique 3. Plus particulièrement, le module de traitement thermique 8 et le module de distribution 9 sont uniquement reliés entre eux par une fixation au niveau du passage 6. Toutefois, le module de traitement thermique 8 et le module de distribution 9 sont en communication aéraulique de sorte que le flux d'air dont la mise au point aérothermique est assurée par le module de traitement thermique 8 circule dans le module de distribution 9, à travers le passage 6, avant d'être diffusé dans l'habitacle H

Selon l'invention, le module de traitement thermique 8 est disposé dans le compartiment avant A et le module de distribution 9 est disposé dans l'habitacle H.

Préférentiellement, l'installation de conditionnement thermique 3 est solidarisée sur la paroi de séparation 2, à l'aide de moyens de solidarisation dédiés à cet effet. A titre d'exemple, le module de distribution 9 comporte une ou plusieurs pattes de fixations 15 permettant de fixer l'installation de conditionnement thermique 3 sur la paroi de séparation 2.

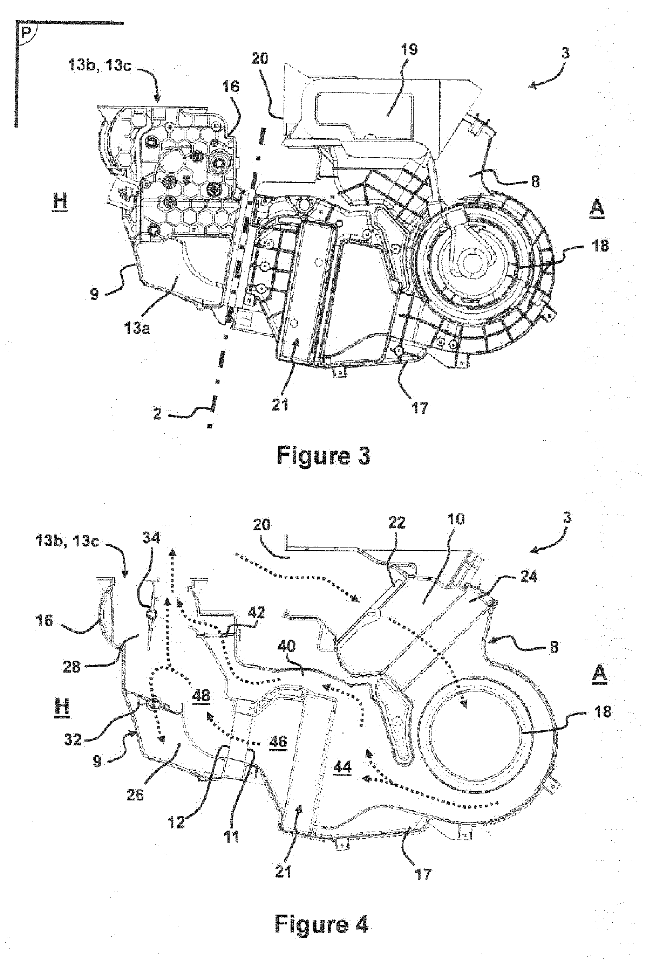

La figure 3 est une vue de côté du système de conditionnement thermique 1 de la figure 1 et illustre l'installation de conditionnement thermique 3 apte à permettre la mise au point aérothermique du flux d'air destiné à être diffusé dans l'habitacle H. Sur la figure 3, la paroi de séparation 2 agencée entre l'habitacle H et le compartiment avant A du véhicule a été représentée en trait pointillé. De plus, la figure 4 est une vue en coupe selon un plan P du système de conditionnement thermique 3 de la figure 3. Plus spécifiquement, le plan P est un plan médian de l'installation de conditionnement thermique 3 disposé parallèlement à une direction longitudinale s'étendant de l'habitacle H vers le compartiment avant A.

Le module de traitement thermique 8 est la partie de l'installation de conditionnement thermique 3 assurant la mise en mouvement du flux d'air destiné à être diffusé dans l'habitacle H, par exemple par l'intermédiaire d'un groupe moto-ventilateur 18. De plus, le module de traitement thermique 8 assure également la mise au point thermique du flux d'air destiné à être diffusé dans l'habitacle H, notamment en le réchauffant et/ou en le refroidissant, par exemple par l'intermédiaire d'au moins un échangeur de chaleur. Le module de traitement thermique 8 comprend au moins une sortie d'air traité 11 du module de traitement thermique 8.

Le module de traitement thermique 8 comprend un boîtier de traitement thermique 17 dans lequel est agencé au moins le groupe moto-ventilateur 18, permettant de mettre en circulation le flux d'air dans l'installation de conditionnement thermique 3. Un tel groupe moto-ventilateur 18 comprend par exemple un moteur électrique entraînant en rotation une turbine radiale disposée dans le boîtier de traitement thermique 17 délimitant le module de traitement thermique 8.

Le boîtier de traitement thermique 17 comprend également au moins un canal de circulation d'air 10, canalisant le flux d'air entre au moins une entrée d'air, avantageusement une entrée d'air extérieur 19 et/ou une entrée d'air intérieur 20, et la sortie d'air traité 11.

Selon l'exemple de réalisation présentée, le module de traitement thermique 8 comprend l'entrée d'air extérieur 19 et l'entrée d'air intérieur 20. L'entrée d'air extérieur 19 est celle par laquelle un flux d'air extérieur à l'habitacle H pénètre dans le module de traitement thermique 8 et l'entrée d'air intérieur 20 est celle par laquelle un flux d'air en provenance de l'habitacle H pénètre dans le module de traitement thermique 8.

Avantageusement, selon un mode particulier de réalisation non représenté, la paroi de séparation 2 comporte une ouverture complémentaire, distincte du passage 6 assurant la liaison aéraulique entre le module de traitement thermique 8 et le module de distribution 9. Une telle ouverture complémentaire permet l'introduction du flux d'air en provenance de l'habitacle H dans le module de traitement thermique 8.

Selon l'exemple de réalisation présenté, le module de traitement thermique 8 comprend deux entrées d'air extérieur 19 disposées latéralement de chaque côté du boîtier de traitement thermique 17 et une unique entrée d'air intérieur 20 agencé en partie médiane et disposée entre les deux entrées d'air extérieur 19.

Le module de traitement thermique 8 comprend également un moyen de sélection 22 du flux d'air admis dans le boîtier de traitement thermique 17 à partir de l'entrée d'air extérieur 19 et/ou de l'entrée d'air intérieur 20. Il est ainsi possible d'autoriser une admission exclusivement du flux d'air d'extérieur ou exclusivement du flux d'air intérieur ou d'un mélange du flux d'air d'extérieur et du flux d'air intérieur. Un tel moyen de sélection 22 prend, par exemple, la forme d'un ou plusieurs volets disposés entre l'entrée d'air extérieur 19 et l'entrée d'air intérieur 20.

Sur la figure 4, le flux d'air admis dans l'installation de conditionnement thermique 3 et circulant dans le module de traitement thermique 8 et le module de distribution 9 est représenté en traits pointillés.

De façon complémentaire, le module de traitement thermique 8 peut également comporter un dispositif de filtration 24, notamment formé par un filtre. Préférentiellement, le dispositif de filtration 24 est agencé entre l'entrée d'air extérieur 19 et l'entrée d'air intérieur 20 et le groupe moto-ventilateur 18.

Le module de traitement thermique 8 permet également d'assurer le traitement aérothermique du flux d'air destiné à être diffusé dans l'habitacle H en modifiant la température de celui-ci. Pour ce faire, le module de traitement thermique 8 comporte un moyen de chauffage 21, réalisé sous la forme d'un premier échangeur de chaleur 21. Selon la présente invention, un tel premier échangeur de chaleur 21 est un radiateur électrique 21 comportant des éléments chauffants, en particulier des résistances électriques, notamment des résistances à coefficient de température positive, aptes à chauffer et à assurer un échange thermique avec le flux d'air traversant le radiateur électrique lorsqu'il est alimenté par un courant, notamment un courant haute tension, par exemple comprise entre 150 Volts et 500 Volts.

Selon la présente invention, le radiateur électrique 21 est l'unique moyen de chauffage 21 du flux d'air destiné à être diffusé dans l'habitacle H agencé dans le module de traitement thermique 8. Ainsi, selon la présente invention, le radiateur électrique 21 est l'unique moyen permettant d'élever la température du flux d'air destiné à être diffusé dans l'habitacle H.

De façon complémentaire, le module de traitement thermique 8 peut également recevoir un deuxième échangeur de chaleur (non représenté), avantageusement parcouru par un fluide réfrigérant apte à assurer un refroidissement du flux d'air destiné à être diffusée dans l'habitacle H. Le deuxième échangeur de chaleur fonctionne donc en tant qu'évaporateur. Un tel deuxième échangeur de chaleur est alors raccordé à un circuit de fluide réfrigérant par l'intermédiaire de deux conduites et d'un organe de détente. Ainsi, selon la présente invention, le deuxième échangeur de chaleur contribue uniquement à abaisser la température du flux d'air destiné à être diffusé dans l'habitacle H. Le deuxième échangeur de chaleur n'est pas apte à élever la température du flux d'air destiné à être diffusé dans l'habitacle H.

Le module de distribution 9 comprend un boîtier de distribution 16 dans lequel est disposé au moins un canal de distribution d'air. Selon l'exemple de réalisation présenté sur les figures, le module de distribution 9 comprend plusieurs canaux de distribution d'air, notamment un canal de distribution "pieds" 26, un canal de distribution "aération" 28 et un canal de distribution "dégivrage", non visible sur les figures, délimités respectivement, d'une part, par une entrée d'air traité 12 du module de distribution 9 et, d'autre part, au moins une bouche de sortie d'air respective, notamment une première bouche de sortie d'air 13a, une deuxième bouche de sortie d'air 13b et une troisième bouche de sortie d'air 13c.

Selon l'exemple de réalisation présentée sur les figures, le canal de distribution "pieds" 26 débouche dans la première bouche de sortie d'air 13a affectée à la "zone pieds" et ménagée dans une partie inférieure du module de distribution 9. Le canal de distribution "aération" 28 débouche dans la deuxième bouche de sortie d'air 13b affectée à la "zone aération" et ménagée dans une partie supérieure du module de distribution 9. Le canal de distribution "dégivrage" débouche dans la troisième bouche de sortie d'air 13c affectée à la "zone dégivrage" et ménagée dans une partie supérieure du module de distribution 9.

Selon la présente invention, avantageusement, le module de distribution 9 est dépourvu d'échangeur de chaleur. Une telle fonction de modification de la température du flux d'air est affectée au module de traitement thermique 8, ce qui permet de réduire significativement l'encombrement extérieur du module de distribution 8, pour limiter la place occupée sous la planche de bord.

Le module de distribution 9 peut comprendre au moins un volet agencé dans le boîtier de distribution 16 et apte à gérer la quantité de flux d'air envoyé vers l'une et/ou l'autre des bouches de sortie d'air respectives, en particulier la première bouche de sortie d'air 13a, la deuxième bouche de sortie d'air 13b et la troisième bouche de sortie d'air 13c. En particulier, le module de distribution 9 comprend au moins :
- un volet "pieds" 32 agencé dans le canal de distribution "pieds" 26 afin de gérer la quantité de flux d'air envoyé dans la première bouche de sortie d'air 13a,
- un volet "aération" 34 agencé dans le canal de distribution "aération" 28 afin de gérer la quantité de flux d'air envoyé dans la deuxième bouche de sortie d'air 13b, et
- un volet "dégivrage", non visible sur les figures, agencé dans le canal de distribution "dégivrage" afin de gérer la quantité de flux d'air envoyé dans la troisième bouche de sortie d'air 13c.

Le module de distribution 9 est la partie de l'installation de conditionnement thermique 3 assurant une répartition du flux d'air issu du module de traitement thermique 8, vers les diverses zones de l'habitacle H, en particulier la zone localisée au niveau d'un pare-brise du véhicule, ou "zone dégivrage", la zone localisée en partie inférieure de l'habitacle H, ou "zone pieds", la zone en partie médiane d'une planche de bord du véhicule ou une zone latérale de l'habitacle H du véhicule, ou "zone aération".

De plus, selon un mode particulier de réalisation non représenté, le module de distribution 9 peut comprendre des conduits d'air, notamment un conduit d'air menant à la zone disposée au niveau d'un pare-brise du véhicule et un conduit d'air menant à la zone médiane et/ou la zone supérieure de l'habitacle du véhicule.

L'entrée d'air traité 12 du module de distribution 9 est une communication aéraulique avec la sortie d'air traité 11 du module de traitement thermique 8.

Suivant une variante de réalisation ne faisant pas partie de l'invention, l'intégralité du flux d'air à traiter thermiquement, et destiné à être diffusé dans l'habitacle H, traverse le radiateur électrique 21. Ainsi, afin d'assurer la mise au point thermique du flux d'air, la gestion de la température est alors assurée par un pilotage électrique du radiateur électrique 21. La tension d'alimentation du radiateur électrique 21 est modulée afin de définir différentes puissances de chauffage dissipées par le radiateur électrique 21.

Selon la présente invention, l'installation de conditionnement thermique 3 comporte une chambre d'admission d'air 44, disposée aval du groupe moto-ventilateur 18 et en amont du radiateur électrique 21. En conséquence, la chambre d'admission d'air 44 reçoit le flux d'air en sortie du groupe moto-ventilateur 18. Selon une variante de réalisation, la chambre d'admission d'air 44 est agencée dans le module de traitement thermique 8.

De plus, l'installation de conditionnement thermique 3 comporte une chambre d'air traitée 46 disposée aval du radiateur électrique 21. En conséquence, la chambre d'air traitée 46 reçoit le flux d'air traité thermiquement après avoir traversé le radiateur électrique 21. Selon une variante de réalisation, la chambre d'air traitée 46 est agencée dans le module de traitement thermique 8 et/ou dans le module de distribution 9.

Enfin, l'installation de conditionnement thermique 3 comporte une chambre de distribution d'air 48 disposée aval du radiateur électrique 21, en aval de la chambre d'air traitée 46, et en amont des divers canaux de distribution d'air, notamment du canal de distribution "pieds" 26, du canal de distribution "aération" 28, et du canal de distribution "dégivrage". La chambre de distribution d'air 48 reçoit le flux d'air en sortie de la chambre d'air traitée 46.

Selon l'invention, la chambre de distribution d'air 48 est agencée dans le module de distribution 9.

La chambre de distribution d'air 48 est en liaison aéraulique avec les divers canaux de distribution d'air, notamment avec le canal de distribution "pieds" 26, le canal de distribution "aération" 28, et/ou le canal de distribution "dégivrage".

Ainsi, depuis la chambre de distribution d'air 48, le flux d'air est distribué dans les divers canaux de distribution d'air, notamment dans le canal de distribution "pieds" 26, dans le canal de distribution "aération" 28, et/ou dans le canal de distribution "dégivrage".

Afin d'assurer la fonction supplémentaire de stratification, permettant de créer un écart de la température entre deux bouches de sortie d'air, notamment entre la première bouche de sortie d'air 13a et la deuxième bouche de sortie d'air 13b, l'installation de conditionnement thermique 3 comporte un conduit de contournement 40. Suivant l'invention, le conduit de contournement 40 s'étend dans le module de traitement thermique 8 et dans le module de distribution 9.

Plus spécifiquement, le conduit de contournement 40 comporte une ouverture amont débouchant dans la chambre d'admission d'air 44. De plus, le conduit de contournement 40 comporte une ouverture aval débouchant dans au moins un des canaux de distribution d'air.

Suivant l'invention, afin d'assurer l'écart de température entre la première bouche de sortie d'air 13a débouchant dans la "zone pieds" et la deuxième bouche de sortie d'air 13b débouchant dans la "zone aération", l'ouverture aval du conduit de contournement 40 est disposée dans le canal de distribution "aération" 28.

En conséquence, le flux d'air circulant dans le conduit de contournement 40 ne traverse pas le radiateur électrique 21. Ainsi, le flux d'air peut donc contourner au moins le radiateur électrique 21, en circulant dans le conduit de contournement 40. A cet effet, l'ouverture amont du conduit de contournement 40 est disposée en amont du radiateur électrique 21 et l'ouverture aval du conduit de contournement 40 est disposée en aval du radiateur électrique 21.

Suivant l'invention, le conduit de contournement 40 débouche en aval de la chambre de distribution d'air 48. Ainsi, le flux d'air peut contourner le radiateur électrique 21, la chambre d'air traitée 46 et la chambre de distribution d'air 48, en circulant dans le conduit de contournement 40.

Le flux d'air circulant dans le conduit de contournement 40 n'est pas traité thermiquement par le radiateur électrique 21. Ainsi, le flux d'air circulant dans le conduit de contournement 40 arrivant dans le canal de distribution "aération" 28 se mélange avec le flux d'air en provenance de la chambre de distribution d'air 48, dans lequel le flux d'air a été traité thermiquement, et canalisé vers le canal de distribution "aération" 28.

En conséquence, la température du flux d'air diffusé à travers la deuxième bouche de sortie d'air 13b débouchant dans la "zone aération" est inférieure à la température du flux d'air diffusé à travers la première bouche de sortie d'air 13a débouchant dans la "zone pieds".

En effet, le flux d'air circulant dans le conduit de contournement 40 permet d'adoucir le flux d'air en provenance de la chambre de distribution d'air 48.

Afin de calibrer la quantité du flux d'air circulant dans le conduit de contournement 40 entrant dans le canal de distribution d'air dédié, en particulier le canal de distribution "aération" 28, le conduit de contournement 40 comporte au moins un organe de régulation 42, par exemple prenant la forme d'un ou plusieurs volets. Préférentiellement, l'organe de régulation 42 est disposé au niveau de l'ouverture aval du conduit de contournement 40. Alternativement ou en complément, l'organe de régulation 42 est disposé au niveau de l'ouverture amont du conduit de contournement 40.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention tel que définie par les revendications.

## Revendications

1. Véhicule, notamment un véhicule électrique, comprenant un système de conditionnement thermique (1) d'un habitacle (H), ledit système (1) comprenant :
- une paroi de séparation (2) séparant l'habitacle (H) et un compartiment avant (A) du véhicule,
- une installation de conditionnement thermique (3) pour ledit véhicule, permettant une mise au point aérothermique d'un flux d'air destiné à être diffusé dans l'habitacle (H) du véhicule, ladite installation (3) comprenant au moins un module de traitement thermique (8), apte à traiter thermiquement le flux d'air, et un module de distribution (9), apte à distribuer le flux d'air dans l'habitacle (H),
le module de traitement thermique (8) comportant un unique moyen de chauffage (21) du flux d'air destiné à être diffusé dans l'habitacle (H) constitué par un radiateur électrique (21), et la paroi de séparation (2) comprenant au moins un passage (6), et le module de traitement thermique (8) et le module de distribution (9) étant deux sous-ensembles distincts et disjoints de l'installation de conditionnement thermique (3), en communication aéraulique de sorte que le flux d'air dont la mise au point aérothermique est assurée par le module de traitement thermique (8) circule dans le module de distribution (9), à travers le passage (6), avant d'être diffusé dans l'habitacle (H), **caractérisé en ce que** l'installation de conditionnement thermique (3) comprend un conduit de contournement (40) comportant une ouverture aval disposée en aval du radiateur électrique (21) et une ouverture amont disposée en amont du radiateur électrique (21), l'installation de conditionnement thermique (3) comprenant au moins une chambre de distribution d'air (48) disposée aval du radiateur électrique (21), la chambre de distribution d'air (48) étant agencée dans le module de distribution (9), le module de distribution (9) comprenant au moins un canal de distribution "pieds" (26) et un canal de distribution "aération" (28), disposés en aval de la chambre de distribution d'air (48), l'ouverture aval du conduit de contournement (40) débouchant dans le canal de distribution "aération" (28), le conduit de contournement (40) comportant au moins un organe de régulation (42) pour calibrer la quantité du flux d'air circulant dans le conduit de contournement (40), le conduit de contournement (40) s'étendant dans le module de traitement thermique (8) et dans le module de distribution (9).

2. Véhicule selon la revendication 1, **caractérisé en ce que** l'organe de régulation (42) est disposé au niveau de l'ouverture aval du conduit de contournement (40).

3. Véhicule selon la revendication 1, **caractérisé en ce que** l'organe de régulation (42) est disposé au niveau de l'ouverture amont du conduit de contournement (40).

4. Véhicule selon l'une des revendications précédentes, **caractérisé en ce que** le module de traitement thermique (8) comprend un boîtier de traitement thermique (17) dans lequel est logé le radiateur électrique (21).

5. Véhicule selon la revendication 4, **caractérisé en ce que** le boîtier de traitement thermique (17) comprend au moins un groupe moto-ventilateur (18), apte à mettre en circulation le flux d'air dans l'installation de conditionnement thermique (3).

## Patentansprüche

1. Fahrzeug, insbesondere Elektrofahrzeug, umfassend ein Klimatisierungssystem (1) eines Innenraums (H), wobei das System (1) Folgendes umfasst:
- eine Trennwand (2), die den Innenraum (H) und einen vorderen Raum (A) des Fahrzeugs trennt,
- eine Klimaanlage (3) für das Fahrzeug, die die aerothermische Entwicklung eines Luftstroms ermöglicht, der dazu bestimmt ist, im Innenraum (H) des Fahrzeugs verteilt zu werden, wobei die Anlage (3) zumindest ein Wärmebehandlungsmodul (8), das in der Lage ist, den Luftstrom thermisch zu behandeln, und ein Verteilungsmodul (9), das in der Lage ist, den Luftstrom im Innenraum (H) zu verteilen, umfasst,
wobei das Wärmebehandlungsmodul (8) ein einzelnes Mittel (21) zum Erwärmen des im Innenraum (H) zu verteilenden Luftstroms aufweist, das durch eine elektrische Heizung (21) gebildet ist, und wobei die Trennwand (2) zumindest einen Durchgang (6) umfasst und wobei das Wärmebehandlungsmodul (8) und das Verteilungsmodul (9) zwei verschiedene und getrennte Unterbaugruppen der Klimaanlage (3) sind, die in lufttechnischer Verbindung stehen, so dass der Luftstrom, dessen aerothermische Entwicklung durch das Wärmebehandlungsmodul (8) gewährleistet wird, im Verteilungsmodul (9) durch den Durchgang (6) zirkuliert, bevor er im Innenraum (H) verteilt wird, **dadurch gekennzeichnet, dass** die Klimaanlage (3) eine Umgehungsleitung (40) umfasst, die eine stromabwärts der elektrischen Heizung (21) angeordnete stromabwärtige Öffnung und eine stromaufwärts der elektrischen Heizung (21) angeordnete stromaufwärtige Öffnung aufweist, wobei die Klimaanlage (3) zumindest eine stromabwärts der elektrischen Heizung (21) angeordnete Luftverteilungskammer (48) umfasst, wobei die Luftverteilungskammer (48) im Verteilungsmodul (9) angeordnet ist, wobei das Verteilungsmodul (9) zumindest einen "Füße"-Verteilungskanal (26) und einen "Lüftung"-Verteilungskanal (28) umfasst, die stromabwärts der Luftverteilungskammer (48) angeordnet sind, wobei die stromabwärtige Öffnung der Umgehungsleitung (40) in den "Lüftung"-Verteilungskanal (28) mündet, wobei die Umgehungsleitung (40) zumindest ein Regelelement (42) zum Kalibrieren der in der Umgehungsleitung (40) zirkulierenden Luftstrommenge aufweist, wobei sich die Umgehungsleitung (40) im Wärmebehandlungsmodul (8) und im Verteilungsmodul (9) erstreckt.

2. Fahrzeug nach Anspruch 1, **dadurch gekennzeichnet, dass** das Regelelement (42) an der stromabwärtigen Öffnung der Umgehungsleitung (40) angeordnet ist.

3. Fahrzeug nach Anspruch 1, **dadurch gekennzeichnet, dass** das Regelelement (42) an der stromaufwärtigen Öffnung der Umgehungsleitung (40) angeordnet ist.

4. Fahrzeug nach einem der vorangehenden Ansprüche, **dadurch gekennzeichnet, dass** das Wärmebehandlungsmodul (8) einen Wärmebehandlungskasten (17) umfasst, in dem die elektrische Heizung (21) untergebracht ist.

5. Fahrzeug nach Anspruch 4, **dadurch gekennzeichnet, dass** der Wärmebehandlungskasten (17) zumindest eine Motor-Gebläse-Einheit (18) umfasst, die in der Lage ist, den Luftstrom in der Klimaanlage (3) umzuwälzen.

## Claims

1. Vehicle, in particular electric vehicle, comprising a thermal conditioning system (1) for a vehicle interior (H), said system (1) comprising:
- a separating wall (2) separating the vehicle interior (H) and a front compartment (A) of the vehicle,
- a thermal conditioning installation (3) for said vehicle, allowing aerothermal adjustment of an airflow intended to be diffused into the interior (H) of the vehicle, said installation (3) comprising at least one heat treatment module (8) that is able to thermally treat the airflow, and a distribution module (9) that is able to distribute the airflow in the vehicle interior (H),
the heat treatment module (8) having a single means (21) for heating the airflow intended to be diffused into the vehicle interior (H), said heating means (21) being formed by an electric radiator (21), and the separating wall (2) comprising at least one through-passage (6), and the heat treatment module (8) and the distribution module (9) being two distinct and separate subassemblies of the thermal conditioning installation (3), in aeraulic communication such that the airflow which is aerothermally adjusted by the heat treatment module (8) circulates in the distribution module (9), through the through-passage (6), before being diffused into the vehicle interior (H), **characterized in that** the thermal conditioning installation (3) comprises a bypass duct (40) having a downstream opening disposed downstream of the electric radiator (21) and an upstream opening disposed upstream of the electric radiator (21), the thermal conditioning installation (3) comprising at least one air distribution chamber (48) disposed downstream of the electric radiator (21), the air distribution chamber (48) being arranged in the distribution module (9), the distribution module (9) comprising at least one "footwell" distribution canal (26) and an "aeration" distribution canal (28), which are disposed downstream of the air distribution chamber (48), the downstream opening of the bypass duct (40) opening into the "aeration" distribution canal (28), the bypass duct (40) having at least one regulating member (42) for calibrating the amount of the airflow circulating in the bypass duct (40), the bypass duct (40) extending in the heat treatment module (8) and in the distribution module (9) .

2. Vehicle according to Claim 1, **characterized in that** the regulating member (42) is disposed at the downstream opening of the bypass duct (40).

3. Vehicle according to Claim 1, **characterized in that** the regulating member (42) is disposed at the upstream opening of the bypass duct (40).

4. Vehicle according to one of the preceding claims, **characterized in that** the heat treatment module (8) comprises a heat treatment housing (17) in which the electric radiator (21) is housed.

5. Vehicle according to Claim 4, **characterized in that** the heat treatment housing (17) comprises at least one engine fan (18) that is able to force the circulation of the airflow in the thermal conditioning installation (3).
